# EUROPÄISCHE PATENTSCHRIFT

(11) **EP 0 371 315 B1**
(45) Veröffentlichungstag und Bekanntmachung des Hinweises auf die Patenterteilung: **26.04.1995**
(21) Anmeldenummer: 89121097.3
(22) Anmeldetag: 14.11.1989
(51) Int. Cl.: H01J 61/30, H01J 9/24, C04B 35/58

(54) **Entladungsgefäss für eine Hochdruckentladungslampe und Verfahren zu dessen Herstellung**
Discharge vessel for a high-pressure discharge lamp, and method for producing same
Enceinte à décharge pour lampe à décharge à haute pression et sa méthode de fabrication

(30) Priorität: 01.12.1988 DE 3840577
(43) Veröffentlichungstag der Anmeldung: 06.06.1990
(73) Patentinhaber: Patent-Treuhand-Gesellschaft für elektrische Glühlampen mbH, 81543 München (DE)
(72) Erfinder: Pabst, Wolfgang, Dr., D-8990 Lindau (DE); Brunner, Dieter, Dr., D-8580 Bayreuth (DE); Jüngst, Stefan, Dr., D-8011 Kirchseeon (DE)

(56) Entgegenhaltungen:
- EP-A- 0 209 345
- EP-A- 0 272 930
- DE-A- 3 530 921
- FR-A- 1 513 887
- FR-A- 2 595 876
- US-A- 4 150 317
- US-A- 4 156 826
- US-A- 4 481 300
- PATENT ABSTRACTS OF JAPAN vol. 10, no. 35 (E-380)(2092) 12 Februar 1986 ; & JP-A-60 193 254
- J. D'Ans und E. Lax. Taschenbuch für Chemiker und Physiker. 2. ber. Auflage, 1949, pp. 1358-1359
- Ullmanns Encyklopädie der technischen Chemie, 4. Auflage, Bd. 19, pp. 392-393.

## Beschreibung

Die Erfindung geht aus von einem Entladungsgefäß für eine Hochdruckentladungslampe gemäß dem Oberbegriff des Anspruchs 1.

Unter dem Begriff Hochdruckentladungslampe sollen im folgenden vor allem Metallhalogenidentladungslampen verstanden werden; insbesondere solche, die für die Allgemeinbeleuchtung geeignet sind und deshalb relativ kleine Leistungen (30 W - 200 W) aufweisen.

Bei Metallhalogenidentladungslampen werden die Entladungsgefäße fast ausschließlich aus Glas mit hohem SiO₂-Gehalt, insbesondere Quarzglas, gefertigt (z.B. EP-A-86 201 833), da sich Quarzglas als korrosionsfest gegenüber Halogenen erwiesen hat. Ein entscheidender Mangel ist jedoch die Möglichkeit der Entglasung und die unzureichende thermische Belastbarkeit, da bei Allgemeinbeleuchtungslampen die maximale Einsatztemperatur von Quarzglas bei etwa 1000 °C liegt. Hinzu kommt die extrem schlechte Wärmeleitfähigkeit von Quarzglas (ca. 0,1 W/mK), die die lichttechnischen Qualitäten der Lampen beschränkt, die ihrerseits bei Lampen für Allgemeinbeleuchtungszwecke eine wesentliche Rolle spielen.

Vereinzelt ist daher der Versuch unternommen worden, Metallhalogenidentladungslampen mit keramischen Entladungsgefäßen zu entwickeln. Beispielsweise ist aus der EP-A-85 306 012 die Verwendung eines keramischen Entladungsgefäßes aus Al₂O₃ bekannt. Zwar läßt sich dadurch die thermische Belastbarkeit erheblich verbessern (maximale Einsatztemperatur ca. 1700 °C), doch treten umgekehrt Probleme mit der Korrosionsfestigkeit auf, insbesondere im Bereich der Abdichtung zwischen Keramikgefäß und Endstopfen, weil die vom Bau von Natriumhochdruckentladungslampen her bekannte Verwendung eines Niobrohrs, das im thermischen Ausdehnungskoeffizient dem Al₂O₃ angepaßt ist, hier wegen der fehlenden Korrosionsbeständigkeit nicht anwendbar ist. In der EP-A-85 306 012 wird vorgeschlagen, als Endstopfen Cermetplatten zu verwenden, wobei ein Endstopfen eingesintert und der andere mittels einer Fritte verschlossen wird. Diese Lösung ist jedoch weder im Hinblick auf die erzielbare Lebensdauer noch hinsichtlich der Herstellungskosten zufriedenstellend.

AlN ist als keramisches Material für die Substratherstellung in der Halbleitertechnologie bereits bekannt (z.B. US-A-4 766 097). Dieses Material ist nicht transparent. Ein transparentes AlN-Material ist aus der JP-A 60-193 254 bekannt, bei der das AlN eine Reinheit von 97,8 % aufweist. Verunreinigungen an Si bzw. an Fe und C werden mit 0,0125 Gew.-% bzw. 0.0020 und 0,11 Gew.-% angegeben.

Aufgabe der Erfindung ist es, ein Entladungsgefäß bereitzustellen, das sowohl eine hohe thermische Belastbarkeit aufweist als auch der starken korrosiven Wirkung der Füllungsbestandteile auf lange Zeit standhält.
Weitere Aufgaben der Erfindung sind:
- Schaffung eines möglichst isothermen Entladungsgefäßes.
- Entwicklung eines einfachen und gut dichtenden Endstopfens für ein keramisches Entladungsgefäß sowie einer Abdichtungstechnik für eine dauerhafte Verbindung zwischen Entladungsgefäß und Endstopfen.
- Bereitstellung eines Verfahrens zur Herstellung des Entladungsge£äßes und Entwicklung einer Hochdruckentladungslampe mit einem verbesserten keramischen Entladungsgefäß.

Diese Aufgaben werden durch die kennzeichnenden Merkmale der Ansprüche 1, 29 und 30 gelöst. Weitere vorteilhafte Ausgestaltungen finden sich in den darauf gerichteten Unteransprüchen.

Als wesentlich für die Herstellung von AlN hoher Transparenz hat sich einerseits die Verwendung hochreiner Ausgangsstoffe und andererseits peinlich genaue Sauberkeit bei der Herstellung und Formgebung des Keramikkörpers erwiesen. Der Abrieb der Werkzeuge (Wolframcarbid) würde sonst zu Einlagerungen von Fremdsubstanzen im Keramikkörper führen. In bezug auf die Reinheit hat sich gezeigt, daß Spuren von Silizium und Eisen in besonderem Maße die Transparenz des Entladungsgefäßes beeinträchtigen. Es ist in bezug auf diese störenden Fremdsubstanzen eine Reinheit von mindestens 99,99 Gew.-% AlN nötig, um die für den Lampenbau erforderliche Transparenz dieses Materials von ca. 80 % zu erreichen.

Andererseits hat es sich als vorteilhaft erwiesen, den hochreinen Ausgangsstoff mit genau definierten, geringen Mengen an Oxiden oder Fluoriden bestimmter Metalle zu dotieren. Diese Zusätze dienen als Sinterhilfen, die ein Sintern bei geringeren Temperaturen und bei geringerem Druck erlauben und die Fähigkeit der Keramik zur innigen Verbindung mit Abdichtmitteln (Lot) verbessern. Die optische Durchlässigkeit wird durch die ausgewählten Zusätze nicht beeinträchtigt.

Für den Lampenbau weist das erfindungsgemäße transparente Entladungsgefäß eine Reihe von Vorteilen auf. Zum ersten ermöglicht die Verwendung von AlN eine hohe maximale Einsatztemperatur (ca. 1700 °C) und erlaubt daher im Vergleich zu Quarzglas eine höhere thermische Belastbarkeit, wodurch eine Erhöhung der Lichtausbeute und eine Verbesserung der Farbqualität erzielt wird. Gleichzeitig ist AlN korrosionsfest gegenüber den Halogenbestandteilen der Füllung und gestattet die Verwendung korrosionsfester metallischer Durchführungen oder Endabschnitte, wodurch die Lebensdauer der Lampe verlängert wird.

Durch die Verwendung von AlN ist es also gelungen, die Vorteile von Al₂O₃ und von Quarzglas miteinander zu vereinigen, ohne Nachteile in Kauf nehmen zu müssen.

Ein weiterer Vorteil der hochreinen AlN-Keramik ist die hohe Wärmeleitfähigkeit (ca. 150 W/mK), die mehr als sechsmal so hoch wie bei Al₂O₃ ist und die es erlaubt, weitgehend isotherme Entladungsgefäße zu schaffen, wie sie gerade für Metallhalogenidentladungslampen besonders interessant sind.

Darüber hinaus ist es gelungen, auch den spezifischen Widerstand der AlN-Keramik so weit zu erhöhen (um einen Faktor 1000), daß sie für einen Einsatz als Entladungsgefäß in Frage kommt.

Ein weiterer Vorteil der Verwendung von AlN für den Lampenbau ist, daß aufgrund des ähnlichen thermischen Ausdehnungskoeffizienten von AlN (5,4 x 10⁻⁶K⁻¹) und Wolfram (5,2 x 10⁻⁶K⁻¹) eine direkte Durchführung in Form eines massiven Wolframstifts, der in das Ende des keramischen Hohlkörpers eingesetzt wird, ermöglicht wird. Diese Durchführung ist beständig gegen Korrosion durch Halogene.

Eine zweite Art der Durchführung verwendet eine becherartig über das Ende des Keramikrohrs gestülpte Kappe aus Molybdän. Hierbei wird der Umstand ausgenutzt, daß der thermische Ausdehnungskoeffizient von Molybdän etwas höher als der von AlN ist. Die Keramik bleibt somit im Betrieb unter Druckspannung, was eine besonders hohe Festigkeit und Dichtigkeit der Durchführung bewirkt.

Eine dritte Art der Durchführung, die zugleich die Möglichkeit des Evakuierens und Füllens beinhaltet, bietet die Verwendung eines korrosionsbeständigen Metallrohrs mit einem an den Keramikkörper angepaßten Durchmesser.

Die Erfindung soll im folgenden anhand einiger Ausführungsbeispiele näher erläutert werden. Es zeigt
- Figur 1: eine Hochdruckentladungslampe, teilweise geschnitten
- Figur 2: ein erstes Ausführungsbeispiel eines Entladungsgefäßes mit Durchführungen im Schnitt
- Figur 3: ein zweites Ausführungsbeispiel eines Entladungsgefäßes mit Durchführungen im Schnitt
- Figur 4: ein weiteres Ausführungsbeispiel einer Durchführung im Schnitt

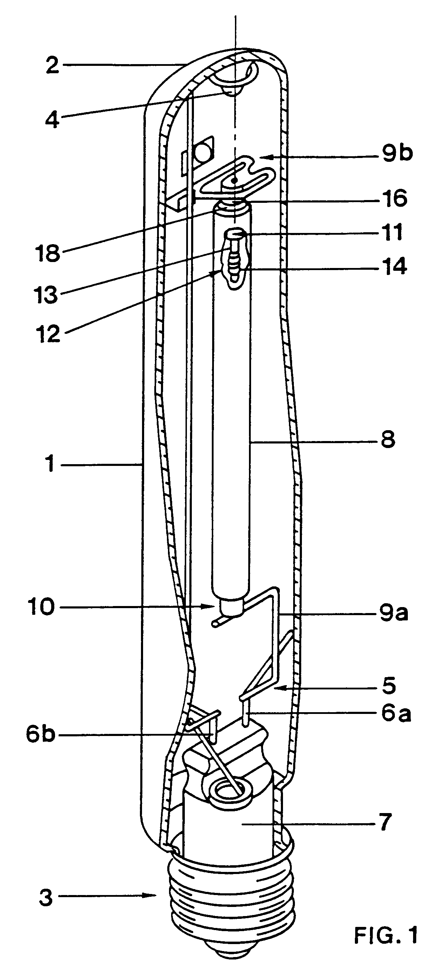

In Figur 1 ist schematisch eine Metallhalogenidentladungslampe mit einer Leistung von 75 W dargestellt. Sie besteht aus einem eine Lampenachse definierenden zylindrischen Außenkolben 1 aus Hartglas, der an einem Ende mit einer Kuppe 2 verschlossen ist, während am anderen Ende ein Schraubsockel 3 angebracht ist. Im Bereich der Kuppe 2 ist ein Nippel 4 zur Halterung eines Gestells 5 ausgeformt. Letzteres weist zwei Stromzuführungen 6 auf, die voneinander isoliert mittels einer Tellereinschmelzung 7 in das sockelseitige Ende des Außenkolbens 1 vakuumdicht eingeschmolzen und in üblicher Weise mit dem Sockel 3 verbunden sind. Das Gestell 5 haltert ein axial im Außenkolben 1 angeordnetes zylindrisches Entladungsgefäß 8 aus hochreiner AlN-Xeramik, indem jeweils eine Stromzuführung 6 über einen Leiter 9 mit einem Endabschnitt 10, 11, der jeweils ein Ende des Entladungsgefäßes abdichtet, verbunden ist. Einer der Leiter, 9a, wird vom Ende des einen Zuführungsdrahts 6a gebildet, während der andere Leiter ein Blattfederteil 9b ist, das mit einem als Stab ausgebildeten Abschnitt der anderen Stromzuführung 6b verschweißt ist. Diese Anordnung berücksichtigt die thermische Ausdehnung während des Lampenbetriebs. Der als massiver Metallstab ausgebildete Abschnitt erstreckt sich bis zur Kuppe 2 und ist dort zu einem Teilkreis gebogen, der den Nippel 4 umfaßt.

Die beiden Endabschnitte 10, 11 aus massivem Wolfram (evtl. mit geringen Zusätzen an Kalium, Silizium und Aluminium (BSD-Material)) tragen jeweils mittig eingesetzte Elektroden 12, bestehend aus einem Elektrodenschaft 13 und einer am entladungsseitigen Ende aufgeschobenen Wendel 14. Der Elektrodenabstand beträgt 7 mm. Die Füllung des Entladungsgefäßes besteht neben einem inerten Grundgas, Argon, aus Quecksilber und Zusätzen an Holmium- und Dysprosiumjodid. Durch die Verwendung des erfindungsgemäßen keramischen Entladungsgefäßes aus Aluminiumnitrid ist es möglich, die Temperatur des Cold Spot auf 1200 °C anzuheben und die Lichtausbeute gegenüber vergleichbaren konventionellen, mit einem Entladungsgefäß aus Quarzglas bestückten Metallhalogenidentladungslampen um 20 % zu steigern. Die Farbtemperatur beträgt 3500 K, der Farbwiedergabeindex erreicht die Stufe 1 (Ra = 90).

Ähnlich gute Verbesserungen der Lampeneigenschaften zeigten sich auch bei anderen Lampenfüllungen, insbesondere bei der Verwendung von Natrium- und Zinnjodid.

Daneben ist auch die Verwendung der AlN-Keramik für Natriumhochdrucklampen möglich, deren Füllung neben Edelgasen Quecksilber und Natrium enthält.

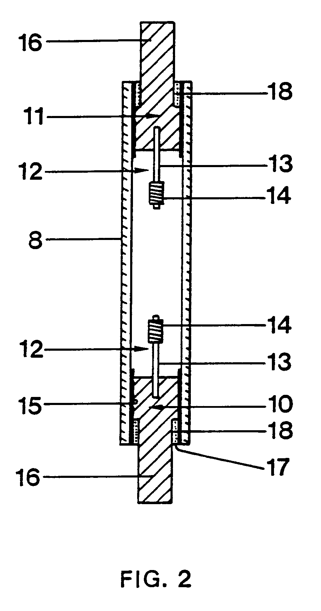

Das erfindungsgemäße Entladungsgefäß ist im Schnitt in Figur 2 gezeigt. Der keramische Hohlkörper 8 mit einer Wandstärke von 0,8 mm weist einen Innendurchmesser von 6 mm bei einer Gesamtlänge von 30 mm auf. Je nach Leistung liegt die Wandstärke bevorzugt im Bereich von 0,2 - 1 mm, der Innendurchmesser bevorzugt zwischen 4 und 10 mm. Auf die Enden des Hohlkörpers 8 ist innen ein Überzug 15, bestehend aus einer dünnen Wolframschicht 15 (Dicke ca. 10 »m) und einer darüber befindlichen AlN-Schicht mit Zusätzen (s.u.), aufgetragen. Die Enden sind beide mit massiven Wolframstiften 10, 11 verschlossen, deren Außendurchmesser dem Innendurchmesser des Hohlkörpers 8 angepaßt ist und deren Länge 10 mm beträgt. Dem Material der Stifte ist vorteilhaft bei höher belasteten Lampentypen ein Zusatz von 3 - 5 Gew.-% Rhenium zur Erhöhung der Rekristallisationstemperatur hinzugefügt. Die Stifte 10, 11 weisen einen Teilbereich 16 mit einem reduzierten Durchmesser (3 mm) auf, so daß jeweils eine zwischen Hohlkörper 8 und Teilbereich 16 umlaufende "Tasche" 17 entsteht. Die Länge des Teilbereichs beträgt 7 mm und ist so gewählt, daß er sich bis außerhalb des Entladungsgefäßes erstreckt. Der überstehende Teilbereich dient zur Befestigung der Zuleitungen, während die Taschen das Einbringen einer zusätzlichen Menge an Abdichtmittel 18, bestehend aus einer Lotkomponente (Metalloxidlot) und einer als Sinterhilfe dienenden Komponente (AlN-Pulver), erleichtern.

In einer anderen Ausführungsform ist der reduzierte Teilbereich durch einen mit Riefen versehenen Bereich ersetzt. In der Frontseite des Wolframstifts, die der Entladung zugewandt ist, ist mittig eine Öffnung angebracht, in der der Elektrodenschaft 13 eingesetzt ist.

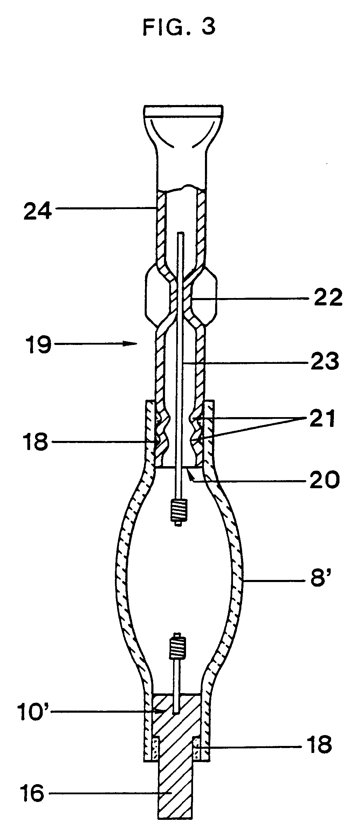

Eine Ausführungsform des Entladungsgefäßes als Ellipsoid 8′ mit rohrförmigen Enden zeigt Figur 3. Während der eine Endabschnitt 10′ wie in Figur 2 aufgebaut ist, jedoch ohne Wolframschicht direkt in das rohrförmige Ende des Entladungsgefäßes eingesintert ist, besteht der zweite Endabschnitt aus einem Metallrohr 19, dessen Außendurchmesser dem Innendurchmesser des rohrförmigen Endes des Ellipsoids 8′ angepaßt ist. Die Länge des Metallrohrs beträgt 30 mm, wobei nur ein kleiner Teilbereich 20 im rohrförmigen Ende des Entladungsgefäßes eingepaßt ist. Er ist mit Riefen 21 ausgestattet, um die Aufnahme eines Abdichtmittels 18 (s.o.) zu erleichtern. Das Metallrohr 19 weist etwa in seiner Mitte, die sich außerhalb des Entladungsgefäßes befindet, eine flachgequetschte Verengung 22 auf, in der das Ende des verhältnismäßig langen Elektrodenschafts 23 gehaltert ist. Der sich daran anschließende Teilabschnitt 24 des Metallrohrs dient zur Befestigung der Zuleitung und ist am Ende ebenfalls gequetscht und vakuumdicht verlötet.

Das Metallrohr 19 ist bevorzugt aus gesintertem Wolfram hergestellt, da dieses Material aufgrund seines angepaßten thermischen Ausdehnungskoeffizienten und seiner ausgezeichneten Korrosionsfestigkeit eine besonders gute Abdichtung ermöglicht. In einer anderen Ausführung, die für Lampentypen mit geringer Belastung und geringer Korrosion geeignet ist, hat sich als Material eine Eisen-Nickel-Cobalt-Legierung (Handelsname VACON) mit hohem Schmelzpunkt bewährt. Bei Füllungen mit besonders hoher korrosiver Wirkung (z.B. Füllungen mit Na-Sn-Jodid-Komplexen) hat sich der Einsatz von Molybdänrohren als besonders vorteilhaft erwiesen, da Molybdän sehr korrosionsfest ist und sein thermischer Ausdehnungskoeffizient nur geringfügig über dem der AlN-Xeramik liegt.

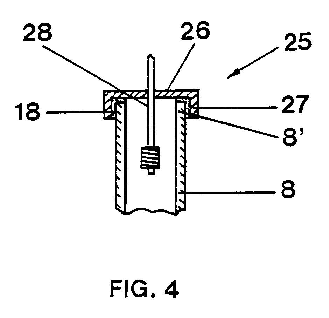

Eine weitere bevorzugte Ausführung einer Durchführung zeigt Figur 4. Auf dem Ende 8′ des Keramikrohrs 8 ist als Endabschnitt eine Kappe 25 aufgesetzt, deren Bodenteil 26 auf dem Ende 8′ aufliegt und deren umlaufender Rand 27 das Ende 8′ umfaßt, wobei der Innendurchmesser des Randes in etwa dem Außendurchmesser des Rohrendes angepaßt ist unter Verwendung einer zwischen Rand 27 und Rohrende 8′ sowie zwischen Bodenteil 26 und Rohrende 8′ eingebrachten Schicht eines Abdichtmittels 18. In das Bodenteil 26 ist mittig ein Elektrodenschaft 28 eingesetzt. Als Material für die Kappe 25 ist Molybdän besonders gut geeignet, da sein etwas höherer Ausdehnungskoeffizient dazu führt, daß im Betrieb der Rand 27 der Kappe besonders dicht am Ende 8′ des Keramikrohrs anliegt.

Nachfolgend soll das Herstellungsverfahren für Entladungsgefäße gemäß den verschiedenen Ausführungsformen näher erläutert werden.

Bei der Herstellung eines AlN-Entladungsgefäßes mit zwei Wolframstiften wird folgendes Verfahren angewendet:

Zunächst wird der zylindrische Keramikkörper in hochreiner Atmosphäre (N₂ mit einer Reinheit von 99,9999) vorgesintert. Auf die Enden des Keramikkörpers wird zunächst innen jeweils eine Wolframschicht als Paste aufgetragen, die das vakuumdichte Verbinden zwischen den Bauteilen erleichtert. Anschließend wird darauf eine weitere Schicht, bestehend aus AlN-Pulver mit einem Lotzusatz aus 0,9 Gew.-% Nd₂O₃ und 0,2 Gew.-% Y₂O₃, aufgetragen. Dieses Lot ist von erheblicher Bedeutung für die Qualität der Verbindung, da es sowohl korrosionsbeständig als auch hochtemperaturfest ist. Übliche Lote (z.B. Metallot aus AgCuTi) haben sich hier als ungeeignet erwiesen.

Gleichzeitig werden die Schäfte der Elektroden in die Öffnungen an der Frontseite der Wolfram-Stifte eingesetzt und durch Löten oder Schweißen verbunden. Der Schaft kann auch in, den Wolframstift eingepreßt werden. Eine weitere Möglichkeit ist, daß der Stift und der Schaft aus einem Stück gefertigt sind. Die Weiterverarbeitung erfolgt in einer Glove-Box, die nach wiederholtem Spülen mit einer Inertgasatmosphäre (Argon) gefüllt wird. Hier wird zunächst ein erster Wolframstift in das erste Ende des Keramikgefäßes eingesetzt, wobei die "Tasche" bzw. die Riefen zur Verbesserung der Abdichtung zusätzlich mit einer Mischung aus AlN-Pulver und Lot (Metalloxidlot der Seltenen Erden (insbesondere Neodym, Yttrium oder Lanthan)) gefüllt werden, und anschließend dichtgesintert. Vom anderen Ende des keramischen Hohlkörpers her werden dann die metallhaltigen Füllungsbestandteile in fester Form (z.B. Quecksilber in Kapsel, Metallhalogenide als Tablette oder Kapsel, die sowohl Quecksilber als auch Metallhalogenide enthält) eingebracht. Anschließend wird auch der zweite Wolframstift in das zweite Ende des keramischen Hohlkörpers unter Zugabe eines Abdichtmittels eingesetzt, wobei die Inertgasatmosphäre in einem Teil der Glove-Box auf den Fülldruck (ca. 50 Torr) eingestellt wird. Dann wird auch der zweite Wolframstift dichtgesintert, wobei der erste Stift, in dessen Nähe die Füllungsbestandteile zu liegen kommen, gekühlt wird.

In ähnlicher Weise kann auch die Ausführungsform mit der Kappen-Abdichtung hergestellt werden.

Eine andere Möglichkeit der vakuumdichten Verbindung zwischen Keramikrohr und Wolfram-Stift besteht darin, daß auf das Aufbringen von Schichten auf die Enden des Keramikrohrs und zusätzliche Abdichtmittel verzichtet wird. Statt dessen wird der Stift eng passend in das Ende der "grünen" Keramik eingeführt. Beim Brennen der Keramik (unter Stickstoffatmosphäre mit Normaldruck) setzt, wie an sich bekannt, ein Schrumpfungsprozeß der Keramik ein, der schließlich zu einer vakuumdichten Verbindung zwischen Rohrende und Stift führt.

Bei der Herstellung eines AlN-Entladungsgefäßes mit einem Wolframstift und einem Metallrohr (aus Molybdän) werden nach dem Vorsintern des Keramikrohrs bereits beide Endabschnitte in die Enden des Keramikrohrs eingesetzt. Der Wolframstift, der zuvor mit einer Elektrode bestückt worden ist, wird nun bereits ebenso dichtgesintert wie das Metallrohr, das zuvor mit einer Elektrode bestückt worden ist, die in einer Verengung gehaltert ist. Die Dichtsinterung kann bei beiden Endabschnitten nach einer der oben beschriebenen Methoden erfolgen (direktes Sintern oder mit Abdichtmittel). Beim direkten Sintern kann auf Riefen oder Taschen an den Endabschnitten verzichtet werden.

Anschließend wird das Keramikrohr durch das noch offene Metallrohr evakuiert und gespült. Auf eine Glove-Box kann bei dieser Ausführung also verzichtet werden. Die Füllung in pulverisierter oder flüssiger Form erfolgt durch das Metallrohr, ebenso die Inertgaszufuhr. Dann wird das Metallrohr an seinem Ende zugequetscht und verlötet. Im Fall, daß das Metallrohr aus Wolframpulver gesintert ist, wird bei der Herstellung ein Kernstift benutzt, auf den das Wolframpulver aufgeschlämmt und darüber die "grüne" Keramik aufgezogen wird, wobei beide anschließend zusammen endgesintert werden.

Die Erfindung ist nicht auf die hier gezeigten Ausführungsbeispiele beschränkt. Beispielsweise kann der Außenkolben die Form eines Ellipsoids besitzen, um der hohen Betriebstemperatur des Entladungsgefäßes Rechnung zu tragen.

Eine besonders geringe Abhängigkeit der Farbtemperatur von der Brennlage wird erreicht durch ein ellipsoidförmiges Entladungsgefäß mit sehr guten isothermen Eigenschaften. Hier ist die Verwendung eines ellipsoidförmigen Außenkolbens aus naheliegenden Gründen von besonderem Vorteil.

Die Verwendung der hier beschriebenen verschiedenen Endabschnitte und Herstellverfahren hängt vom jeweiligen Lampentyp ab. Beispielsweise ist bei höherwattigen Typen eher eine Direktsinterung vorteilhaft, während bei niederwattigen Typen die Technik mit Abdicht- und Verbindungsmittel angewendet wird.

## Patentansprüche

1. Entladungsgefäß für eine Hochdruckentladungslampe, bestehend aus einem längsgestreckten, keramischen Hohlkörper, dessen beiden Enden mit jeweils einem Endabschnitt (10, 11; 10′, 19) abgedichtet sind, wobei jeder Endabschnitt (10; 11; 10′ 19) eine Elektrode (12) mit Schaft (13) aufweist, die in das Innere des Entladungsgefäßes hineinragt, und wobei die Füllung ein Inertgas und den Dampf eines oder mehrerer Metalle sowie ggf. Metallhalogenide enthält, dadurch gekennzeichnet, daß der keramische Hohlkörper aus hochreinem Aluminiumnitrid (AlN) besteht, das durchscheinend ist, wobei der Hohlkörper weniger als 0,01 Gew-% Eisen und weniger als 0,01 Gew.-% Silizium enthält.

2. Entladungsgefäß nach Anspruch 1, dadurch gekennzeichnet, daß der keramische Hohlkörper insgesamt weniger als 0,05 Gew.-% an färbenden Metallkationen, einschließlich Eisen, enthält.

3. Entladungsgefäß nach Anspruch 1, dadurch gekennzeichnet, daß der keramische Hohlkörper weniger als 0,01 Gew.-% Wolframcarbid enthält.

4. Entladungsgefäß nach Anspruch 1, dadurch gekennzeichnet, daß der keramische Hohlkörper Dotierungen eines oder mehrerer Oxide oder Fluoride der Metalle Yttrium, Kalzium, Neodym, Lanthan und/oder Aluminium enthält.

5. Entladungsgefäß nach Anspruch 4, dadurch gekennzeichnet, daß der Anteil der Dotierungsstoffe zwischen 0,01 Gew.-% und 5 Gew.-% beträgt.

6. Entladungsgefäß nach Anspruch 1, dadurch gekennzeichnet, daß der Hohlkörper ein Zylinder (8) ist.

7. Entladungsge£äß nach Anspruch 1, dadurch gekennzeichnet, daß der Hohlkörper ein Ellipsoid (8′) ist.

8. Entladungsgefäß nach Anspruch 1, dadurch gekennzeichnet, daß zumindest einer der Endabschnitte durch einen massiven Wolframstift (10, 11; 10′) gebildet wird.

9. Entladungsgefäß nach Anspruch 8, dadurch gekennzeichnet, daß der Außendurchmesser des Stifts dem Innendurchmesser des Hohlkörpers an seinen Enden angepaßt ist.

10. Entladungsgefäß nach Anspruch 8, dadurch gekennzeichnet, daß der Wolframstift (10, 11) einen Teilbereich (16) mit reduziertem Durchmesser aufweist, der sich auf der von der Entladung abgewandten Seite des Stifts befindet.

11. Entladungsgefäß nach Anspruch 8, dadurch gekennzeichnet, daß der Wolframstift (10′) mit dem Keramikkörper direkt versintert ist.

12. Entladungsgefäß nach Anspruch 8, dadurch gekennzeichnet, daß der Stift außer Wolfram einen Zusatz von Rhenium enthält.

13. Entladungsgefäß nach Anspruch 8, dadurch gekennzeichnet, daß die Enden des Hohlkörpers innen mit einer als Verbindungsmittel wirkenden Schicht (15) überzogen sind, die Wolframpulver enthält.

14. Entladungsgefäß nach Anspruch 8 und/oder 13, dadurch gekennzeichnet, daß der Wolframstift mit einem Abdichtmittel (18) abgedichtet ist, das sich in einer zwischen dem reduzierten Teilbereich (16) und dem Hohlkörper ausgebildeten Tasche (17) befindet.

15. Entladungsgefäß nach Anspruch 8, dadurch gekennzeichnet, daß der Wolframstift (10, 11; 10′) für die Aufnahme der Elektrode entladungsseitig eine Öffnung aufweist, in die der Elektrodenschaft (13) eingesetzt ist.

16. Entladungsgefäß Anspruch 1, dadurch gekennzeichnet, daß einer der Endabschnitte ein korrosionsbeständiges Metallrohr (19) ist, dessen Außendurchmesser dem Innendurchmesser des keramischen Hohlkörpers angepaßt ist und dessen entladungsfernes Ende über den keramischen Hohlkörper hinausreicht.

17. Entladungsgefäß nach Anspruch 16, dadurch gekennzeichnet, daß das Metallrohr (19) eine Verengung (22) aufweist, die den Elektrodenschaft (23) haltert.

18. Entladungsgefäß nach Anspruch 16, dadurch gekennzeichnet, daß das Metallrohr (19) innerhalb des Hohlkörpers (8′) mindestens eine Riefe (21) aufweist, die mit einem Abdichtmittel (18) gefüllt ist.

19. Entladungsgefäß nach Anspruch 14 oder 18, dadurch gekennzeichnet, daß das Abdichtmittel AlN-Pulver enthält.

20. Entladungsgefäß nach Anspruch 14, dadurch gekennzeichnet, daß das Abdichtmittel ein Lot aus einem oder mehreren Metalloxiden enthält.

21. Entladungsgefäß nach Anspruch 16, dadurch gekennzeichnet, daß das Metallrohr (19) aus Wolfram oder einer Legierung der Metalle Nickel und/oder Eisen und/oder Cobalt besteht.

22. Entladungsgefäß nach Anspruch 1, dadurch gekennzeichnet, daß zumindest einer der Endabschnitte als metallische Kappe (25) ausgebildet ist, die über das Ende des Hohlkörpers gestülpt ist und deren Innendurchmesser dem Außendurchmesser des keramischen Hohlkörpers an seinem Ende angepaßt ist.

23. Entladungsgefäß nach Anspruch 16 oder 22, dadurch gekennzeichnet, daß der Endabschnitt aus Molybdän besteht.

24. Entladungsgefäß nach Anspruch 1, dadurch gekennzeichnet, daß das Entladungsgefäß von einem durchsichtigen Außenkolben (1) umgeben ist.

25. Entladungsgefäß nach Anspruch 24, dadurch gekennzeichnet, daß der Außenkolben als Ellipsoid geformt ist.

26. Entladungsgefäß nach Anspruch 1, dadurch gekennzeichnet, daß der Metalldampf Quecksilber und die Metallhalogenide Jodide und/oder Bromide der Seltenen Erdmetalle sind.

27. Entladungsgefäß nach Anspruch 1, dadurch gekennzeichnet, daß der Metalldampf Quecksilber und die Metallhalogenide Jodide und/oder Bromide von Zinn (Sn) und/oder Indium (In) und/oder Thallium (T1) und/oder Scandium (Sc) und/oder Natrium (Na) sind.

28. Entladungsgefäß nach Anspruch 1, dadurch gekennzeichnet, daß die Metalldämpfe Quecksilber und Natrium sind.

29. Verfahren zur Herstellung eines Entladungsgefäßes für eine Hochdruckentladungslampe nach Anspruch 8, bestehend aus den Schritten:
- Vorsintern des keramischen Hohlkörpers in hochreiner Atmosphäre
- eventuelles Beschichten der Enden des Hohlkörpers mit einem Abdichtmittel und/oder Verbindungsmittel
- Verbinden der beiden als Wolframstifte ausgebildeten Endabschnitte mit den Elektroden
- Einsetzen eines ersten Endabschnitts in den Hohlkörper in Inertgasatmosphäre
- Einbringen der metallhaltigen Füllungsbestandteile in flüssiger oder fester Form in Inertgasatmosphäre
- Einsetzen des zweiten Endabschnitts in den Hohlkörper in Inertgasatmosphäre
- evtl. Füllen der an den Endabschnitten ausgebildeten Taschen mit Abdichtmittel
- Dichtsintern der Endabschnitte

30. Verfahren zur Herstellung eines Entladungsgefäßes für eine Hochdruckentladungslampe nach Anspruch 16, bestehend aus den Schritten:
- Vorsintern des keramischen Hohlkörpers in hochreiner Atmosphäre
- Verbinden des als Wolframstift ausgebildeten ersten Endabschnitts mit einer Elektrode mit kurzem Schaft und des als Metallrohr ausgebildeten zweiten Endabschnitts mit einer Elektrode mit langem Schaft
- Einsetzen der beiden Endabschnitte in den Hohlkörper, wobei in die Riefe(n) des Metallrohrs ein Lot in Form eines Drahtes oder Pulvers eingelegt wird
- Dichtsintern des ersten Endabschnitts und gleichzeitiges Verlöten des Metallrohrs mit dem Hohlkörper im Bereich der Riefe(n)
- Abpumpen und Füllen des Entladungsgefäßes mit Inertgas-durch das Metallrohr
- Einfüllen der metallhaltigen Füllungsbestandteile in flüssiger oder fester Form durch das Metallrohr
- Verschließen des Metallrohrs durch Zuquetschen und Verlöten eines äußeren Teilabschnitts.

## Claims

1. Discharge vessel for a high-pressure discharge lamp, comprising an elongated ceramic hollow body whose two ends are sealed with an end section (10, 11; 10′, 19) in each case, each end section (10; 11; 10′; 19) having an electrode (12) with shaft (13) which extends into the interior of the discharge vessel, and the filling containing an inert gas and the vapour of one or more metals and, optionally, metal halides, characterized in that the ceramic hollow body comprises high-purity aluminium nitride (AlN) which is translucent, the hollow body containing less than 0.01% by weight of iron and less than 0.01% by weight of silicon.

2. Discharge vessel according to Claim 1, characterized in that the ceramic hollow body contains, in total, less than 0.05% by weight of colouring metal cations, including iron.

3. Discharge vessel according to Claim 1, characterized in that the ceramic hollow body contains less than 0.01% by weight of tungsten carbide.

4. Discharge vessel according to Claim 1, characterized in that the ceramic hollow body contains dopants of one or more oxides or fluorides of the metals yttrium, calcium, neodymium, lanthanum and/or aluminium.

5. Discharge vessel according to Claim 4, characterized in that the proportion of dopant substances is between 0.01% by weight and 5% by weight.

6. Discharge vessel according to Claim 1, characterized in that the hollow body is a cylinder (8).

7. Discharge vessel according to Claim 1, characterized in that the hollow body is an ellipsoid (8′).

8. Discharge vessel according to Claim 1, characterized in that at least one of the end sections is formed by a solid tungsten pin (10, 11; 10′).

9. Discharge vessel according to Claim 8, characterized in that the external diameter of the pin is matched to the internal diameter of the hollow body at its ends.

10. Discharge vessel according to Claim 8, characterized in that the tungsten pin (10, 11) has a subregion (16) which has reduced diameter and is situated on that side of the pin which is remote from the discharge.

11. Discharge vessel according to Claim 8, characterized in that the tungsten pin (10′) is directly sintered to the ceramic body.

12. Discharge vessel according to Claim 8, characterized in that the pin contains not only tungsten but also an addition of rhenium.

13. Discharge vessel according to Claim 8, characterized in that the ends of the hollow body are coated on the inside with a layer (15) which acts as bonding agent and contains tungsten powder.

14. Discharge vessel according to Claim 8 and/or 13, characterized in that the tungsten pin is sealed with a sealant (18) which is situated in a pocket (17) formed between the reduced subregion (16) and the hollow body.

15. Discharge vessel according to Claim 8, characterized in that the tungsten pin (10, 11; 10′) has an opening on the discharge side which is designed to receive the electrode and into which the electrode shaft (13) is inserted.

16. Discharge vessel according to Claim 1, characterized in that one of the end sections is a corrosion-resistant metal tube (19) whose external diameter is matched to the internal diameter of the ceramic hollow body and whose end remote from the discharge extends beyond the ceramic hollow body.

17. Discharge vessel according to Claim 16, characterized in that the metal tube (19) has a constriction (22) which retains the electrode shaft (23).

18. Discharge vessel according to Claim 16, characterized in that the metal tube (19) has, inside the hollow body (8′), at least one groove (21) which is filled with a sealant (18).

19. Discharge vessel according to Claim 14 or 18, characterized in that the sealant contains AlN-powder.

20. Discharge vessel according to Claim 14, characterized in that the sealant contains a solder comprising one or more metal oxides.

21. Discharge vessel according to Claim 16, characterized in that the metal tube (19) comprises tungsten or an alloy of the metals nickel and/or iron and/or cobalt.

22. Discharge vessel according to Claim 1, characterized in that at least one of the end sections is designed as a metal cap (25) which is fitted over the end of the hollow body and whose internal diameter is matched to the external diameter of the ceramic hollow body at its end.

23. Discharge vessel according to Claim 16 or 22, characterized in that the end section comprises molybdenum.

24. Discharge vessel according to Claim 1, characterized in that the discharge vessel is surrounded by a transparent external bulb (1).

25. Discharge vessel according to Claim 24, characterized in that the external bulb is shaped as an ellipsoid.

26. Discharge vessel according to Claim 1, characterized in that the metal vapour is mercury and the metal halides are iodides and/or bromides of the rare earth metals.

27. Discharge vessel according to Claim 1, characterized in that the metal vapour is mercury and the metal halides are iodides and/or bromides of tin (Sn) and/or indium (In) and/or thallium (Tl) and/or scandium (Sc) and/or sodium (Na).

28. Discharge vessel according to Claim 1, characterized in that the metal vapours are mercury and sodium.

29. Method for producing a discharge vessel for a high-pressure discharge lamp according to Claim 8, comprising the steps:
- presintering of the ceramic hollow body in high-purity atmosphere,
- optionally coating the ends of the hollow body with a sealant and/or bonding agent,
- bonding the two end sections, designed as tungsten pins, to the electrodes,
- insertion of a first end section into the hollow body in inert-gas atmosphere,
- introduction of the metal-containing filling components in liquid or solid form in inert-gas atmosphere,
- insertion of the second end section into the hollow body in inert-gas atmosphere,
- optional filling of the pockets formed at the end sections with sealant,
- sinter sealing of the end sections.

30. Method for producing a discharge vessel for a high-pressure discharge lamp according to Claim 16, comprising the steps:
- presintering of the ceramic hollow body in high-purity atmosphere
- bonding of the first end section, designed as tungsten pin, to an electrode having a short shaft and of the second end section, designed as metal tube, to an electrode having a long shaft,
- insertion of the two end sections into the hollow body, a solder in the form of a wire or powder being placed in the groove(s) of the metal tube,
- sinter sealing of the first end section and simultaneous soldering of the metal tube to the hollow body in the region of the groove(s),
- evacuation and filling of the discharge vessel with inert gas through the metal tube,
- introduction of the metal-containing filling constituents in liquid or solid form through the metal tube,
- closure of the metal tube by pinching and soldering an outer subsection.

## Revendications

1. Enceinte de décharge pour une lampe à décharge à haute pression, constituée d'une pièce creuse en céramique s'étendant en longueur et dont les deux extrémités sont rendues étanches par, respectivement, une partie d'extrémité (10, 11 ; 10′, 19), chaque partie d'extrémité (10, 11 ; 10′, 19) comportant une électrode (12) ayant une tige (13) qui fait saillie à l'intérieur de l'enceinte de décharge, le remplissage contenant un gaz inerte et la vapeur d'un ou de plusieurs métaux ainsi que le cas échéant des halogénures métalliques, caractérisée en ce que la pièce creuse en céramique est en nitrure d'aluminium (AlN) très pur qui est translucide, la pièce creuse contenant moins de 0,01% en poids de fer et moins de 0,01% de silicium.

2. Enceinte de décharge suivant la revendication 1, caractérisée en ce que la pièce creuse en céramique contient au total moins de 0,05% en poids de cations métalliques colorants y compris le fer.

3. Enceinte de décharge suivant la revendication 1, caractérisée en ce que la pièce creuse en céramique contient moins de 0,01% en poids de carbure de tungstène.

4. Enceinte de décharge suivant la revendication 1, caractérisée en ce que la pièce creuse en céramique contient des subtances de dopage constituées d'un ou de plusieurs oxydes ou fluorures des métaux que sont l'yttrium, le calcium, le néodyme, le lanthane et/ou l'aluminium.

5. Enceinte de décharge suivant la revendication 4, caractérisée en ce que la proportion de substances de dopage est comprise entre 0,01% en poids et 5% en poids.

6. Enceinte de décharge suivant la revendication 1, caractérisée en ce que la pièce creuse est un cylindre (8).

7. Enceinte de décharge suivant la revendication 1, caractérisée en ce que la pièce creuse est un ellipsoïde (8′).

8. Enceinte de décharge suivant la revendication 1, caractérisée en ce qu'au moins l'une des parties d'extrémité est formée d'une cheville (10, 11; 10′) pleine en tungstène.

9. Enceinte de décharge suivant la revendication 8, caractérisée en ce que le diamètre extérieur de la cheville est adapté au diamètre intérieur de la pièce creuse à ses extrémités.

10. Enceinte de décharge suivant la revendication 8, caractérisée en ce que la cheville (10, 11) en tungstène comporte une partie (16) de diamètre réduit qui se trouve du côté de la cheville éloigné de la décharge.

11. Enceinte de décharge suivant la revendication 8, caractérisée en ce que la cheville (10′) en tungstène est frittée directement à la pièce en céramique.

12. Enceinte de décharge suivant la revendication 8, caractérisée en ce que la cheville contient outre du tungstène une addition de rhénium.

13. Enceinte de décharge suivant la revendication 8, caractérisée en ce que les extrémités de la pièce creuse sont revêtues intérieurement d'une couche servant d'agent de liaison et contenant de la poudre de tungstène.

14. Enceinte de décharge suivant la revendication 8 et/ou 13, caractérisée en ce que la cheville en tungstène est rendue étanche par un agent (18) d'étanchéité, qui se trouve dans une poche comprise entre la partie (16) réduite et la pièce creuse.

15. Enceinte de décharge suivant la revendication 8, caractérisée en ce la cheville (10, 11; 10′) en tungstène comporte, pour la réception de l'électrode, du côté de la décharge une ouverture dans laquelle est engagée la tige (13) de l'électrode.

16. Enceinte de décharge suivant la revendication 1, caractérisée en ce que l'une des parties d'extrémité est un tube (19) métallique résistant à la corrosion, dont le diamètre extérieur correspondant au diamètre intérieur de la pièce creuse en céramique et dont l'extrémité éloignée de la décharge va au-delà de la pièce creuse en céramique.

17. Enceinte de décharge suivant la revendication 16, caractérisée en ce que le tube (19) métallique comporte un rétrécissement (22) qui maintient la tige (23) d'électrode.

18. Enceinte de décharge suivant la revendication 16, caractérisée en ce que le tube (19) métallique comporte à l'intérieur de la pièce creuse (8′) au moins une rainure (21) remplie d'un agent (18) d'étanchéité.

19. Enceinte de décharge suivant la revendication 14 ou 18, caractérisée en ce que l'agent d'étanchéité contient de la poudre d'AlN.

20. Enceinte de décharge suivant la revendication 14, caractérisée en ce que l'agent d'étanchéité contient une brasure en un oxyde métallique ou en plusieurs oxydes métalliques.

21. Enceinte de décharge suivant la revendication 16, caractérisée en ce que le tube (19) métallique est en tungstène ou en un alliage des métaux que sont le nickel et/ou le fer, et/ou le cobalt.

22. Enceinte de décharge suivant la revendication 1, caractérisée en ce qu'au moins l'une des parties d'extrémité est constituée en chapeaux (25) métalliques qui coiffent l'extrémité de la pièce creuse et dont le diamètre intérieur est adapté au diamètre extérieur de la pièce creuse en céramique à son extrémité.

23. Enceinte de décharge suivant la revendication 16 ou 22, caractérisée en ce que la partie d'extrémité est en molybdène.

24. Enceinte de décharge suivant la revendication 1, caractérisée en ce que l'enceinte de décharge est entourée d'une ampoule (1) extérieure transparente.

25. Enceinte de décharge suivant la revendication 24, caractérisée en ce que l'ampoule extérieure est conformée en ellipsoïde.

26. Enceinte de décharge suivant la revendication 1, caractérisée en ce que la vapeur métallique est du mercure et les halogénures métalliques sont des iodures et/ou des bromures de métaux de terre rare.

27. Enceinte de décharge suivant la revendication 1, caractérisée en ce que la vapeur métallique est du mercure et les halogénures métalliques sont des iodures et/ou des bromures d'étain (Sn) et/ou d'indium (In) et/ou de thallium (Tl) et/ou de scandium (Sc) et/ou de sodium (Na).

28. Enceinte de décharge suivant la revendication 1, caractérisée en ce que les vapeurs métalliques sont du mercure et du sodium.

29. Procédé de fabrication d'une enceinte de décharge pour une lampe à décharge à haute pression suivant la revendication 8, comprenant les stades de :
- préfrittage de la pièce frittée en céramique dans une atmosphère très pure
- revêtement éventuel des extrémités de la pièce frittée d'un agent d'étanchéité et/ou d'un agent de liaison
- liaison des deux parties d'extrémité, constituées sous la forme de chevilles en tungstène, aux électrodes
- insertion de l'une des parties d'extrémité dans la pièce creuse en atmosphère gazeuse inerte
- introduction des constituants contenant des métaux du remplissage sous forme liquide ou solide dans l'atmosphère de gaz inerte
- insertion de la deuxième partie d'extrémité de la pièce creuse dans l'atmosphère de gaz inerte
- éventuellement remplissage par un agent d'étanchéité des poches formées aux parties d'extrémité
- frittage étanche des parties d'extrémité.

30. Procédé de fabrication d'une enceinte de décharge pour une lampe à décharge à haute pression suivant la revendication 16, qui consiste en les stades de :
- préfrittage de la pièce creuse en céramique dans une atmosphère très pure
- liaison de la première partie d'extrémité, constituée sous la forme d'une cheville en tungstène, à une électrode à tige courte et de la deuxième partie d'extrémité constituée sous la forme d'un tube métallique, à une électrode à tige longue
- insertion des deux parties d'extrémité dans la pièce creuse, une brasure sous la forme d'un fil métallique ou d'une poudre étant insérée dans la ou les rainures du tube métallique
- frittage étanche de la première partie d'extrémité et simultanément brasage du tube métallique à la pièce creuse dans la zone de la rainure ou des rainures
- évacuation par pompage et remplissage de l'enceinte de décharge par du gaz inerte par le tube métallique
- introduction des constituants contenant des métaux du remplissage sous forme liquide ou solide par le tube métallique
- fermeture du tube métallique par pincement et brasage d'une partie extérieure.
